# EUROPEAN PATENT APPLICATION

(11) **EP 4 811 141 A1**
(43) Date of publication of application: **23.09.2026**
(21) Application number: 25165101.4
(22) Date of filing: 20.03.2025
(51) Int. Cl.: G06F 11/3668, G06F 8/60, G06F 8/71, G06F 11/3698

(54) **METHODS OF CONTROLLING SOFTWARE TESTING**

(71) Applicant: Barclays Execution Services Limited, London E14 5HP (GB)
(72) Inventor: JAIN,, Siddharth, 411014 Pune (IN); SAXENA,, Arpit, 411014 Pune (IN)
(74) Representative: Carpmaels & Ransford LLP

(57) **Abstract**

The present invention relates to methods, computer program products, computer readable media comprising instructions and systems for controlling software testing. In particular, the present invention relates to ensuring software is deployed and tested correctly across multiple environments before it is deployed into production.

## Description

### Technical Field

The present invention relates to methods, computer program products, computer readable media comprising instructions and systems for controlling software testing. In particular, the present invention relates to ensuring software is deployed and tested correctly across multiple environments before it is deployed into production.

### Background

With contemporary advances in computational speed, efficiency and connectivity, among others, it has become necessary and possible to update progressively more complex software at an increasingly rapid pace. Emerging pressures for software modularity and a trend of movement towards distributed and cloud-based computing only serve to compound this complexity and the dependency of software elements upon one another. One consequence of this movement in the software space is the increasing complexity of ensuring that new software versions are compatible with all interrelated software elements and function as intended before they are deployed to production. As such, there is a demand for methods and systems which ensure that software has been tested rigorously and completely before it is deployed to production.

Traditionally, software was generally self-contained or isolated to a small number of dependencies on other software or software elements. This style of software favoured traditional mainframe hardware, particularly where this was only being used for a small (by contemporary standards) number of processing tasks which could therefore be facilitated by discrete software for each processing task.

Despite historical precedent, advances in hardware and software have prompted the move towards modular, scalable software which is compatible with distributed computing and cloud-based computing systems. For example, rather than monolithic applications, industry is now moving towards microservices for distributed computing, such as for event-driven architectures in contemporary servers and cloud computing systems. The modular approach taken by microservices allows software to be easily scaled and quickly deployed (thereby being able to take advantage of cloud-computing capacity). This approach further promotes the use of a greater number of smaller applications (e.g. microservices) with more dependencies (which updated versions of applications should be tested with to ensure compatibility). The need for thorough testing is further compounded in event-driven architectures where upstream applications are allowed to be oblivious to downstream applications which are reliant upon the events they produce, in turn necessitating that events be formatted, structured and output in an expected way. When combined with the increasing frequency of software updates, driven in part by improved connectivity, challenges are posed for ensuring that new versions of software have passed every test required to prove that they are suitable for deploying to production. Such challenges include ensuring that each version of software passes all required tests in sequence (which may involve testing in multiple test environments), traceably, with appropriate approval and in combination with any other microservices which are to be executed together (to guarantee microservice compatibility). If testing of a version of software is not subject to the complete software testing, errors and failures are significantly more likely to occur which may cause a number of undesirable consequences such as: an irretrievable loss of data processed by the version of the software, incorrect data output from the version of the software or inoperability of the version of the software leading to downtime. In light of these challenges, a need has emerged for systems and methods for testing contemporary software which ensure that the software meets the necessary requirements for deployment to production so as to mitigate the chance of errors in, and or other failures of, the version of the program when deployed to production.

### Summary

The present invention is defined by the independent claims, with further optional features being defined by the dependent claims.

In a first aspect of the invention, there is provided a computer implemented method for controlling software testing, wherein software test data for a program is stored in a passport file on a memory associated with a lower environment and a higher environment, wherein the lower environment is a test environment, the memory further comprising a higher environment manifest file, the method comprising: obtaining a promotion request for progressing a version of a program from the lower environment to the higher environment; receiving a response to the promotion request to validate the promotion request, and validating the promotion request; storing, in the higher environment manifest file, a version indicator based on the promotion request, the higher environment manifest file further comprising data pertaining to deploying the version of the program; writing promotion data to the passport file based upon the validated promotion request; and deploying, to the higher environment, the version of the program based on the validated promotion request, the data pertaining to deploying the program and the version indicator. In this way, the invention provides a rigid framework for progressing the version of the program from a test environment, thereby limiting testing progression to versions which have validated promotion requests associated with them. By requiring a promotion request which is subsequently validated, it can be securely and reliably ensured that all relevant tests have been passed in the lower environment, and that entities associated with all relevant environments agree that the version of the program should proceed to the higher environment. Furthermore, by writing promotion data to the passport file, a single source of truth is created for the entire testing pathway undertaken by the version of the software. This not only allows developers to ensure that the version of the program has undergone all tests without amendment before deployment to production, but also increases the ease and speed at which errors in production programs can be rectified by identifying testing information relevant to the failed production program. In addition to this, the combination of validating promotion requests and storing promotion data to a passport file (alongside retaining the environment manifest files) improves the security of the system, by providing a traceable and validated multi-step path between development and production environments (via test environments) for every version of a program. Moreover, by moving the version of the program from a test environment by writing a version indicator to a higher manifest file which is subsequently used to deploy the version of the program, memory and data transfer efficiencies are found. Moreover, manifest files ensure that the same version of the program and the same version of software elements associated with the version of the program are deployed in the higher and lower environment in the correct way, thereby avoiding anomalous test successes or errors caused by integration and compatibility failures.

In some embodiments, the data pertaining to deploying the version of the program is metadata pertaining to deploying the version of the program. In this way, each manifest file is made memory efficient and can avoid introducing deployment errors by not comprising deployment instructions themselves. Moreover, this allows deployment mechanisms to be identified and thereby outsourced to the most efficient and secure software configured for deployment of the version of the program. The use of metadata in manifest files also improves the suitability of the present invention for deploying the version of the program in a cloud-based system, where deployment software which accepts metadata is predominantly used for deploying programs rather than discrete instructions for deploying a program.

In some embodiments, the lower environment is a development environment for program development and, in some further embodiments, the memory comprises a lower environment manifest file, the method further comprising the step of: populating the lower environment manifest file with the version indicator based on one or more continuous integration (CI) pipelines. In this way, the controlled software testing begins at a development environment. This allows the passport file to cover the development of the program and ensures that the security, reliability and deployment consistency of validated promotion requests and manifest files start at the lowest possible environment, a development environment. Moreover, by populating the lower environment manifest file with the CI pipeline (which is part of the development process for the version of the program), the invention can be automatically initiated through program development, thereby mitigating deployment failure in higher environments caused by human failure to initialise controlled software testing.

In some embodiments, the higher environment is a production environment. This allows the present invention to record promotion data for promotion to production environments, thereby providing a single source of truth and promotion request validation control throughout the development/testing pathway of the version of the program. This also means that the passport file will indicate which versions of the program are deployed to production, thereby providing a library of program versions useful for rolling back production environments or tracing versions of the program in production to improve system security. In some alternative embodiments, the higher environment is a secondary test environment, thereby allowing the invention to handle testing pathways with multiple test environments. This provides intermediate validation of the version of the program via promotion requests between the test environments such that the number of tests for each individual validation can be minimised by increasing the total number of promotion requests in the testing pathway. In turn, the addition of instances of validation to the testing pathway improve system security and increase throughput by not relying upon a single stage validation of the version of the program before production.

In some embodiments, the lower environment and the higher environment are cloud-based environments. In this way, the present invention can control the testing pathway of cloud-based programs, which are ubiquitous in contemporary computing. Moreover, due to the complexities of cloud-based software deployment, using a manifest file to control deployment of the version of the program to the higher environment simplifies deployment and further ensures that the version of the program is being tested with identical associated software components in each cloud-based environment. This is significant as cloud-based environments are typically more complex due to comprising more layers of software above the hardware level to affect virtualisation and, in some cases, containerisation.

In some embodiments, the method further comprises: verifying that the version of the program corresponding to the version indicator has been deployed on the higher environment based on the higher environment manifest file. In this way, the invention can cross-check the deployment of the version of the program to the higher environment, thereby ensuring that, no matter what software is used to deploy the version of the program, the version of the program deployed corresponds to the version indicator and therefore to the version of the program deployed in lower environments. This improves system security and testing reliability by mitigating the possibility of the version of the program not being subject to some tests or changing during completion of the testing pathway.

In some embodiments, the higher environment manifest file comprises a type indicator for the version of the program, and wherein deploying, to the higher environment, the version of the program further comprises: initiating and orchestrating a deployment pipeline for deploying the version of the program to the higher environment, wherein the deployment pipeline is selected from a plurality of deployment pipelines based on the type indicator for the version of the program. In this way, the invention can specify, in the manifest file, the nature of the entity to be deployed. For example, the type of program corresponding to the version of the program. This allows deployment to be tailored to the type of the version of the program according to the type indicator. This allows deployment pipelines to be simplified for deploying only specific types of versions of programs, improving the ease of maintenance of the system and making deployment more reliable.

In some embodiments, validating the promotion request comprises: requesting a first promotion request approval from a lower environment administrator and a second promotion request approval from a higher environment administrator; and receiving a first promotion request approval from the lower environment administrator and a second promotion request approval from the higher environment administrator. In this way, the invention, as part of validating the promotion request, checks with administrators of both environments involved in the method before deploying the version of the program to the higher environment. This gives lower environment administrators control over when testing of the version of the program is complete. At the same time, this prevents the lower environment administrators from prematurely promoting the version of the program before sufficient tests have been passed by requiring approval from the higher environment administrator. Cumulatively, this mitigates both insufficient and excessive testing of the version of the program, thereby reducing errors in testing the version of the program and improving testing efficiency. In further embodiments, the first promotion request approval comprises first credentials associated with the lower environment administrator and the second promotion request approval comprises second credentials associated with the higher environment administrator, and wherein a reference credential directory containing credentials for each administrator of each environment is stored in the memory, the method further comprising: validating the first credentials and the second credentials against the credentials in the reference credential directory. In this way, the invention further improves system security by ensuring that authorised individuals are approving the promotion of the version of the program. Specifically, this both prevents malicious software from being promoted towards production through the testing pathway by unauthorised parties and it ensures that the relevant administrators are approving the promotion themselves. This latter factor promotes tests being thoroughly carried out and ensures that test procedure is being adhered to.

In some embodiments, the method further comprises: generating a test deployment catalogue product comprising the version of the program from the lower environment; and publishing the test deployment catalogue product to a test deployment catalogue. In this way, a method of deployment for the version of the program can be generated based upon the version of the program developed and/or tested in the lower environment and published in the catalogue. This not only provides a method for deploying the version of the program to the higher environment, but can be reused, without modification, for deploying the version of the program to subsequent higher environments, thereby ensuring that the same version of the program (deployed in the same way) is tested in each higher environment. This feature therefore improves testing pathway adherence and mitigates errors introduced in re-deploying the version of the program during testing.

In some embodiments, the passport file and each manifest file are unique to a release branch. One advantage of this feature is that the passport file will store records of each version of the program within a specific release branch and the testing undergone by each version of the program in the release branch. This simplifies reviewing the alterations made to the version of the program over the release branch, thereby improving the ease of use of the testing pathway. In addition, this release branch-wise organisation improves the ease of identifying what versions of the program were deployed to any environment at any given time, thereby improving the speed of troubleshooting by allowing reversion to prior versions of the program and/or lower environments easily while also improving system resilience based on the same reversion speed improvement.

In a second aspect of the invention, there is provided a computer program product comprising instructions which, when executed by a computer system, cause the computer system to perform the steps of: obtaining a promotion request for progressing a version of a program from a lower environment to a higher environment; receiving a response to the promotion request to validate the promotion request, and validating the promotion request; storing, in a higher environment manifest file, a version indicator based on the promotion request, the higher environment manifest file further comprising data pertaining to deploying the version of the program; writing promotion data to a passport file based upon the validated promotion request and deploying, to the higher environment, the version of the program based on the validated promotion request, the data pertaining to deploying the program and the version indicator. In some embodiments, the computer system is a cloud computing system.

In a third aspect of the invention, there is provided a (non-transitory) computer readable medium comprising instructions which, when executed by a computer system, cause the computer system to perform the steps of: obtaining a promotion request for progressing a version of a program from a lower environment to a higher environment; receiving a response to the promotion request to validate the promotion request, and validating the promotion request; storing, in a higher environment manifest file, a version indicator based on the promotion request, the higher environment manifest file further comprising data pertaining to deploying the version of the program; writing promotion data to a passport file based upon the validated promotion request and deploying, to the higher environment, the version of the program based on the validated promotion request, the data pertaining to deploying the program and the version indicator. In some embodiments, the computer system is a cloud computing system.

In a fourth aspect of the invention, there is provided a computer system, the computer system comprising at least one processor, wherein the at least one processor is configured to perform the steps of: obtaining a promotion request for progressing a version of a program from a lower environment to a higher environment; receiving a response to the promotion request to validate the promotion request, and validating the promotion request; storing, in a higher environment manifest file, a version indicator based on the promotion request, the higher environment manifest file further comprising data pertaining to deploying the version of the program; writing promotion data to a passport file based upon the validated promotion request and deploying, to the higher environment, the version of the program based on the validated promotion request, the data pertaining to deploying the program and the version indicator. In some embodiments, the computer system is a cloud computing system.

### Brief Description of the Drawings

Embodiments of the invention are described below, by way of example, with reference to the following drawings, in which:
Figure 1A and Figure 1B illustrate a local server system for hosting computational environments in which the methods of the invention may be implemented.
Figure 2 illustrates a cloud computing system for hosting computational environments in which the methods of the invention may be implemented.
Figure 3A and Figure 3B show components of a cloud computing system for implementing the invention.
Figure 4 shows an example architecture of a cloud computing system for implementing the invention.
Figure 5 shows an exemplary arrangement of production and test environments in a cloud computing system domain in accordance with methods of the invention.
Figure 6 shows an exemplary flow diagram for controlling software testing in accordance with methods of the invention.
Figure 7 shows a detailed example of a test pathway in accordance with methods of the invention.
Figures 8A to Figure 8D show examples of manifest file data for each manifest file referenced in Figure 7 in accordance with methods of the invention. Figure 8E shows an example of the data content of the passport file used, in accordance with methods of the invention, to record promotion data for a version of a program being tested in the testing pathway of Figure 7.

### Detailed Description

This invention relates to systems and methods for controlling software testing. Software testing refers to any trial, experimentation, analysis and/investigation which software might be subject to. Software testing may relate to user acceptance, software integration, software security, software performance, software functionality and/or any other aspect of software which may need to be assessed in order to ensure that the software is acceptable for use in production. While software testing may occur to software which has already been deployed in a production environment, so-called testing in production (TIP), the present invention generally relates to software testing conducted prior to deploying the software to a production environment.

Herein, the terms software refers to data, including computer-executable instructions, which may be used by a computer, cloud-implemented or otherwise, to perform a processing task. Programs are a sub-set of software which include any directly computer-executable instructions for enabling the computer to perform the processing task. Applications are a sub-set of programs which consist of computer-executable instructions for directly performing all or part of the processing task. For example, programs pertinent to the allowing computer-hardware to function such as drivers or, for cloud-computing scenarios, hypervisors would not be considered applications as these programs. In most cases, the systems and methods for controlling software testing disclosed herein will be used for testing applications, however, the present invention is also suitable for testing other non-application programs.

The term "software elements" is herein used to collectively refer to software which may include one or more programs or non-programs (such as databases or libraries). Generally, the term "software elements" is used to refer to software which a program that is being tested is dependent upon, such that these dependencies (which are specific to each program being tested and therefore fall outside the scope of the presently claimed invention) do not need to be specified in every permutation.

As programs, whether applications or otherwise, are developed and improved upon by modifications made by developers, the code making up the program and its functionalities, interoperability capabilities, required dependencies, etc. may change despite the overall purpose of the program remaining the same. Therefore, various versions of a program will be created with the same core purpose, but modifications which differentiate them. Typically, modifications will be made to programs to improve their functionality, security, interoperability with new programs, etc., resulting in the need to replace preexisting versions of a program with new versions of a program once the new versions of a program have been tested.

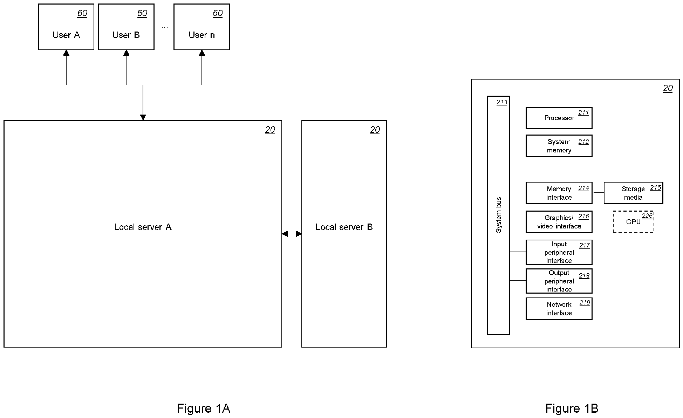

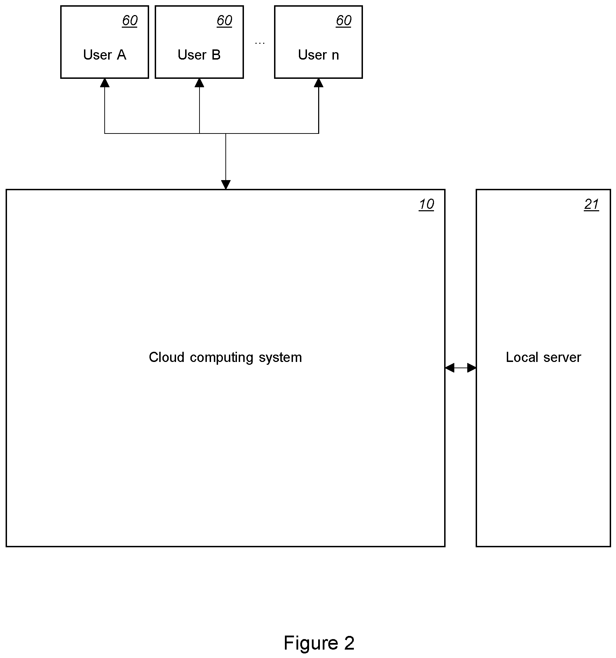

As referred to herein, a computational environment is a hardware platform, whether physical or virtualised, with software and firmware required for the execution of applications, such as an operating system, installed on it. Environments can generally be hosted on any computer system. However, due to the nature and scale of contemporary enterprise software, the production and non-production test environments will generally be hosted on a local server, such as local server 20 shown in Figure 1A, Figure 1B and Figure 2, or on a cloud computing system, such as cloud computing system 10 shown in Figure 2, Figure 3A, and Figure 4. Each environment may be self-contained such that data from outside the environment is not required for execution of an application. However, each environment may be communicatively coupled to any number of other computational environments, whether on the same server/cloud computing system or on a user device/secondary server or otherwise. Applications may be deployed to and executed within a computational environment, where such execution may form part of testing the application or a portion of the application.

Computational environments where software may be deployed can be divided into two mutually exclusive categories: production environments and non-production environments. Production environments encompass all computational environments where software is applied to real-world interactions and data. Production environments are therefore the intended end-point for consumer software as these are the environments which consumers will interact with. Non-production environments include all other environments, such as test environments where software testing is conducted under controlled conditions. For the purposes of the present description, development environments, where new or updated software is created, are considered to be a particular type of test environment irrespective of whether discrete software testing occurs in these environments or not.

It is common practice to conduct software testing according to a predefined process and/or plan indicating at least what software tests should be conducted in a pre-defined sequence, herein referred to as a testing pathway. To complete the software tests in the testing pathway, several test environments may need to be transitioned through. The present invention relates to test pathways comprising more than one environment. Consecutive computational environments forming part of a test pathway may be referred to as higher or lower respectively, where the higher test environment is closer to the end (generally, a production environment) of the test pathway than the lower environment. The movement of software from one environment to another environment is herein referred to as a promotion, particularly if the environment promoted to is closer to the final production environment (the highest environment) than the environment the software is being promoted from. Generally, promoting software from a lower environment to a higher environment will comprise deploying the version of the software, which is already deployed on the lower environment, on the higher environment. Promotion may be referred to as progressing a version of software to a higher environment. Promotion does not require the version of software to be removed from the lower environment, but this may occur to alleviate strain on computational resources.

The test environments may relate on a one-to-one basis to each individual software test but, generally, test environments will be organised such that each test environment relates to a type of software testing, including but not limited to: user acceptance testing, software integration testing, software performance testing, software security testing and/or software functionality testing, including any sub-set of these types of software testing. For hardware to be provisioned correctly for a given test or set of tests, and such that testing software is deployed correctly with appropriately limited access to real-world data, it is commonplace for a testing pathway to require that tests be performed sequentially in a series of test environments. This use of a series of test environments also simplifies control over software testing to an appropriate tester/team for each test by permitting the appropriate tester/team permanent control over one test environment. One, purely exemplary, testing pathway may comprise the following series of environments: a development environment, a software integration testing environment, an end-to-end (E2E) test environment and a production environment. In other examples, there may be any number of test environments between a development or production environment. Moreover, a distinct development environment may not form part of the testing pathway. Similarly, a testing pathway may not end at a production environment, such as in situations where no production environment exists for the software being tested.

### Local Computing Environment

Figure 1A illustrates a conventional system for hosting production and non-production environments. As shown in Figure 1A, such systems are centralised around local server A 20 that is responsible for performing various data processing. The local server A 20 is communicatively coupled to a plurality of user devices 60 (i.e. User A, User B... User n), from which requests may be received and to which outputs may be sent. The local server may also be communicatively coupled to one or more other local servers, such as local server B 20. The communicative coupling is established via at least one communication network such as the Internet, a local area network (LAN), a wide area network (WAN), a cellular network (e.g. such as 3G, 4G LTE and 5G), and the like.

Local server 20 is a physical server or group of servers that are located on-premises or within a private network. Local server 20 stores a plurality of applications, each of the applications having a different purpose or underlying product to which it relates. For example, in a consumer banking context, one application may relate to debit card transactions while another application relates to credit card transactions. As these applications are updated, software testing must be undertaken to ensure that the new versions of the application meet functionality and security standards. As such, local server A 20 may host two or more environments, wherein at least one environment is a test environment. Inclusive in the two or more environments, local server A 20 may host one or more production environments and/or one or more development environments. Alternatively, one or more production environments and/or one or more development environments may be hosted on a separate local server, such as local server B 20. In some embodiments, the two or more environments may be virtualised, such that each environment does not directly correspond to a fixed allocation of hardware, thereby allowing the initialisation or cessation of environments as required by software testing load and permitting the dynamic reallocation of computational resources to each environment. In other embodiments, the environments may be implemented in physical hardware, without virtualisation.

The local server 20 is configured to generate and receive messages in a relational data format. Relational data formats are structured and organised in tables, with rows representing records and columns representing attributes. This type of data format is commonly used in traditional database management systems and can be easily queried and manipulated using Structured Query Language (SQL). The use of a relational data format for message generation and reception at the local server 20 allows for compatibility with legacy systems and applications that rely on this type of data format.

Turning to Figure 1B, an example local server 20 is shown. Local server 20 may be embodied as any type of computer, including a server, a desktop computer, a laptop, a tablet, a mobile device, or the like. In most embodiments, the local server 20 may take the form of an enterprise server. Components of local server 20 include, but are not limited to, a processor 211, such as a central processing unit (CPU), system memory 212, and system bus 213. System bus 213 provides communicative coupling for various components of local server 20, including system memory 212 and processor 211. Example system bus architectures include parallel buses, such as Peripheral Component Interconnect (PCI) and Integrated Drive Electronics (IDE), and serial buses, such as PCI Express (PCle) and Serial ATA (SATA).

System memory 612 is formed of volatile and/or non-volatile memory such as read only memory (ROM) and random-access memory (RAM). ROM is typically used to store a basic input/output system (BIOS), which contains routines that boots the operating system and sets up the components of local server 20, for example at start-up. RAM is typically used to temporarily store data and/or program modules that the processor 211 is operating on.

Local server 20 includes other forms of memory, including (computer readable) storage media 215, which is communicatively coupled to the processor 211 through a memory interface 214 and the system bus 213. Storage media 215 may be or may include volatile and/or non-volatile media. Storage media 215 may be or may include removable or non-removable storage media. Examples storage media 215 technologies include: semiconductor memory, such as RAM, flash memory, solid-state drives (SSD); magnetic storage media, such as magnetic disks; and optical storage, such as hard disk drives (HDD) and CD, CD-ROM, DVD and BD-ROM. Data stored in storage medium 215 may be stored according to known methods of storing information such as program modules, data structures, or other data, the form of which is discussed further herein.

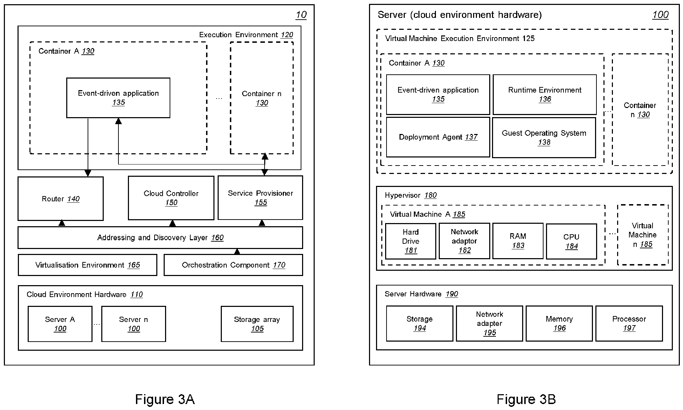

Various program modules are stored on the system memory 212 and/or storage media 215, including an operating system and one or more applications. Such applications may cause the local server 20 to interact with a cloud computing system such as the cloud computing system 10 of Figure 3. For instance, the application may cause an event-driven application 135 to begin executing in the cloud computing system 10.

Local server 20 may be communicatively coupled to a cloud computing system, such as the cloud computing system 10 of Figure 3, via the least one communication network, such as the Internet. Other communication networks may be used including a local area network (LAN) and/or a wide area network (WAN). Further communication networks may be present in various types of local server 20, such as mobile devices and tablets, to cellular networks, such as 3G, 4G LTE and 5G. Local server 20 establishes communication through network interface 219.

Local server 20 is communicatively coupled to a display device via a graphics/video interface 216 and system bus 213. In some instances, the display device may be an integrated display. A graphical processing unit (GPU) 226 may be used in addition to improve graphical and other types of processing. Local server 20 also includes an input peripheral interface 217 and an output peripheral interface 218 that are communicatively coupled to the system bus 213. Input peripheral interface is communicatively coupled to one or more input devices, such as a keyboard, mouse or touchscreen, for interaction between the local server 20 and a user. Output peripheral interface 218 is communicatively coupled to one or more output devices, such as a speaker. When not integrated, the communicative coupling may be wired, such as via a universal serial bus (USB) port, or wireless, such as over Bluetooth.

### Cloud Computing System

Cloud computing systems provide improved scalability, flexibility, reliability, and disaster recovery capabilities over local servers. This is because the infrastructure for cloud computing systems is typically provided by dedicated cloud providers such as Amazon Web Services, Google Cloud or Microsoft Azure, that handle updates and maintenance of the infrastructure.

Figure 2 depicts an example system having a cloud computing system 10 in which the methods of the invention may be implemented. As shown in Figure 2, the local server 21 may still be present in this system. However, instead of being communicatively coupled to the plurality of user devices 60, the local server 21 is communicatively coupled to the cloud computing system 10, and it is the cloud computing system 10 which is communicatively coupled to the plurality of user devices 60. The communicative coupling is established via at least one communication network such as the Internet, a local area network (LAN), a wide area network (WAN), a cellular network (e.g. such as 3G, 4G LTE and 5G), and the like. Preferably, the at least one communication network utilises encryption (e.g., Secure Sockets Layer) to secure data being transferred to and from the cloud computing system 10.

While the plurality of user devices 60 are able to natively couple to the cloud computing system 10, for example via a dedicated application installed on the user device 60, local server 21 may contain legacy infrastructure and applications, and for this reason cannot natively be coupled to the cloud computing system 10. This is because, unlike local server 21 which may use batch-driven applications, cloud computing system 10 uses event-driven applications.

In the context of event-driven applications, an 'event' refers to a discrete and significant occurrence or notification within the cloud computing system 10 that triggers a specific action or process. Events are used to signal that a particular condition or change has occurred and should be processed or responded to. For this reason, event-driven applications are designed to detect, capture, and respond to these events in real-time or near-real-time, allowing for responsive and dynamic behaviour within event-driven applications. Events can be generated by various sources, such as user interactions via user device 60, system events, or external sources such as local server 21, and they serve as the catalyst for initiating specific actions, processing logic, or workflows within the cloud computing system 10.

Accordingly, interface modules may be provided in the system to couple the local server 21 with the cloud computing system 10. Interface modules may be outside and separate from the cloud computing system. However, preferably, the cloud computing system 10 contains interface modules. When interface modules are provided in the cloud computing system 10, the interface modules can provide communicative coupling to the local server 21.

Before providing further details about cloud computing system 10, the components of cloud computing system 10, as typically provided by a cloud provider, are discussed with respect to Figure 3A and Figure 3B.

As shown in Figure 3A, cloud computing system 10 hosts one or more event-driven applications 135, which are executed in the cloud computing system 10. The event-driven application 135 may include executable and/or source code, depending on the implementation language. In this way, the computing resources are moved from the local server 21, where processing is performed in conventional systems such as that shown in Figure 1A and Figure 1B, to cloud computing system 10.

As seen in Figure 3A, cloud computing system 10 comprises cloud computing system hardware 110 that can be invoked to instantiate data processing, data storage, or other computer resources using cloud computing hardware 110 for a limited or defined duration. Cloud computing system hardware 110 may comprise one or more physical servers 100, and a storage array network 105, as well as other suitable hardware. Cloud computing system hardware 110 may be configured to provide a virtualisation environment 165 that supports the execution of a plurality of virtual machines 185 across the one or more physical servers 100. As described in relation to Figure 3B, the plurality of virtual machines 185 provide various services and functions for cloud computing system 10.

Virtualisation environment 165 of Figure 3A includes orchestration component 170 that monitors the cloud computing system hardware 110 resource consumption levels and the requirements of cloud computing system 10 (e.g., by monitoring communications routed through addressing and discovery layer 160), and provides additional cloud computing system hardware 110 to cloud computing system 10 as needed. For example, if cloud computing system 10 requires additional virtual machines 185 to host a further event-driven application 135, orchestration component 170 can initiate and manage the instantiation of the virtual machines 310 on the one or more servers 100 to support such needs. In one example implementation, virtualisation environment 165 may be implemented by running Amazon Elastic Compute Cloud (Amazon EC2) on servers 100.

Cloud computing system 10 supports an execution environment 125 that comprises a plurality of virtual machines 185 (or plurality of containers 130) instantiated to host the one or more event-driven applications 135. Each virtual machine 185 or container 130 may be considered a computational environment.

Event-driven applications 135 can access internal services provided by cloud computing system 10 as well as external services from the local server 21. Internal and/or external services may be software elements configured to support the execution of event-driven applications 135, such as libraries, drivers and/or other programs (whether those programs are applications or otherwise). A service provisioner 155 may serve as a communications intermediary between these available services (e.g., internal services and external services) and other components of cloud computing system 10 (e.g., cloud controller 150, router 140, containers 130), utilising the methods discussed elsewhere herein. Addressing and discovery layer 160 provides a common interface through which components of cloud computing system 10, such as service provisioner 155, cloud controller 150, router 140 and containers 130 in the execution environment 125 can communicate.

Cloud controller 150 is configured to orchestrate the deployment process for the one or more event-driven applications 135 in cloud computing system 10. Typically, once cloud controller 150 successfully orchestrates the event-driven application 135 in a container, e.g. container A 130, the event-driven application 135 may be interacted with. For example, a user device 60 may interact with the event-driven application 135 through a web browser or any other appropriate application residing on user device 60. Router 140 receives the access requests (e.g., a uniform resource locator or URL) and routes the request to container 130 which hosts the event-driven application.

It should be recognised that the embodiment of Figure 3A is merely exemplary and that alternative cloud computing system architectures may be implemented consistent with the teachings herein.

Figure 3B is a schematic of an exemplary server 100 for implementing the cloud computing system 10 of the invention. In particular, Figure 3B depicts server 100 comprising server hardware 190 and virtual machine execution environment 125 having containers 130 with event-driven applications 135. The server hardware 190 may include local storage 194, such as a hard drive, network adapter 195, system memory 196, processor 197 and other I/O devices such as, for example, a mouse and keyboard (not shown).

A virtualisation software layer, also referred to as hypervisor 180, is installed on top of server hardware 190. Hypervisor 180 supports virtual machine execution environment 185 within which containers 130 may be concurrently instantiated and executed. In particular, each container 130 comprises one or more event-driven applications 135, deployment agent 137, runtime environment 136 and guest operating system 138 packaged into a single object. This enables container 130 to execute event-driven applications 135 in a manner which is isolated from the physical hardware (e.g. server hardware 190, cloud computing system hardware 110), allowing for consistent deployment regardless of the underlying physical hardware.

As shown in Figure 3B, virtual machine execution environment 125 of server 100 supports a plurality of containers 130. Docker is an example of a virtual machine execution environment 125 which supports containers 130. For each container 130, hypervisor 180 manages a corresponding virtual machine 185 that includes emulated hardware such as virtual hard drive 181, virtual network adaptor 182, virtual RAM 183, and virtual CPU 184.

It should be recognised that the various layers and modules described with reference to Figure 3B are merely exemplary, and that other layers and modules may be used with the same functionality without departing from the scope of the invention. It should further be recognised that other virtualised computer architectures may be used, such as hosted virtual machines.

A user device 60 may require components and structure similar to or the same as local server 21 as depicted in Figure 1B. In particular, the user device 60 may comprise a system bus, processor, system memory, memory interface, storage media, graphics/video interface, GPU, input peripheral interface, output peripheral interface and network interface.

### Cloud Computing System Architecture

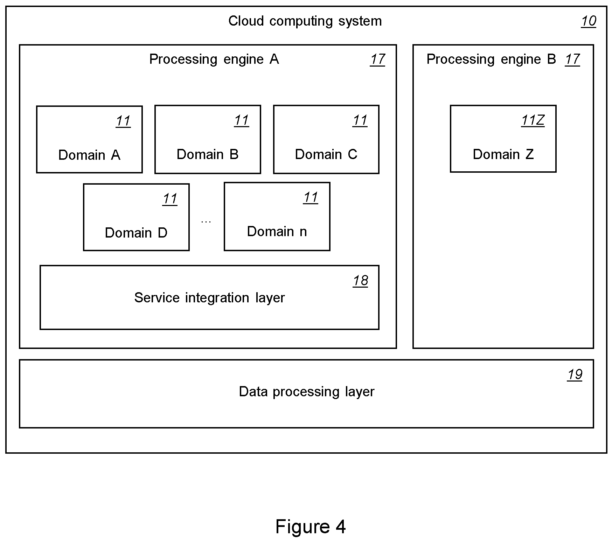

Figure 4 depicts an embodiment of cloud computing system 10 architecture for implementing the present invention.

As shown in Figure 4, the cloud computing system 10 contains one or more processing engines 17. Preferably, there are a plurality of processing engines 17. Figure 4 depicts two processing engines, processing engine A and processing engine B. Each processing engine 17 in the cloud computing system 10 is a logical partition that is responsible for providing a particular processing function or subset of processing functions. Each processing engine 17 operates in an event-driven fashion. In other words, each processing engine 17 processes data as discrete events, and is able to support event-driven applications 135 of the type discussed with respect to Figure 3A and Figure 3B.

Each processing engine 17 has one or more domains 11. The domains 11 in a particular processing engine 17 provide security boundaries for data in the cloud computing system 10. These domains may be separate and distinct within the cloud computing system 10 allowing for the control of access to data based on different security levels. This separation of domains ensures that data is protected and only accessible by authorised users or applications. The domains 11 also modularise the particular processing function or subset of processing functions. Such modular architectures offer advantages such as scalability, reusability, and ease of maintenance by breaking the processing engine 17 down into smaller, interchangeable domains. Like the processing engines 17, each domain 11 processes data as discrete events and is therefore able to support event-driven applications 135 of the type discussed with respect to Figure 3A and Figure 3B. Moreover, each domain 11 may be implemented through serverless capabilities of the cloud computing system 10. For example, when the cloud computing system 10 is an AWS environment, such serverless capabilities may include DynamoDB, Amazon S3, AWS Lambda, AWS Step Functions, and Amazon API gateway. Optionally, each domain 17 may be composed of one or more sub-domains.

Each domain 11 may contain one or more processing modules. The processing modules are event-driven and can be used within one or more event-driven applications 135. Put another way, the processing modules are agnostic to the event-driven applications 135, and therefore may be combined with other components to easily create a new event-driven application 135. This flexibility enables the cloud computing system 10 to adapt to changing requirements and support a wide range of event-driven applications 135. When the cloud computing system 10 is an AWS environment, each of the processing modules may be hosted on AWS ECS (Container) running on EC2 or AWS Fargate.

In some examples, the domain 11 may include one or more data streams that are configured to stream data. These data streams are event-driven and may have incoming and outgoing connections to various components within the cloud computing system 10 and outside of the cloud computing system 10. For instance, within the cloud computing system 10, the data streams may be used to communicate data to and/or from one or more processing modules, one or more domains 11, one or more processing engines 17, one or more databases, and the like. Outside of the cloud computing system 10, the data streams may be used to communicate with local server 21 and/or external provider systems 40. In an AWS environment, such data streams may be provided by Amazon Kinesis, which is a particular type of scalable and durable real-time data streaming application, or another data streaming application.

Each domain 11 may also contain one or more domain databases. Domain databases may be used for different reasons, such as to log event processing occurring within the domain 11. In some examples, a database is configured to store data. The database may be a NoSQL database, such as DynamoDB, which provides a flexible and scalable approach for storing and managing data. The use of a NoSQL database ensures that the cloud computing system 10 can efficiently handle large volumes of data and support a wide range of applications.

The one or more processing modules, data streams, and domain databases work together to provide a scalable, secure, and efficient domain 11 for processing and managing data.

In some examples, the domain 11 may be sub-divided into one or more cloud-based accounts. Any one or more of the processing modules, data streams and domain databases may be associated with a particular cloud-based account. Alternatively, it may be that none of the processing modules, data streams and domain databases is associated with the cloud-based account. The domain 11 may comprise one or more processing modules, data streams, and/or domain databases that are not associated with any cloud-based account. For example, domain A 11 may comprise a single cloud-based account with which a data stream and domain database are associated. Domain B 11 may comprise two cloud-based accounts. To illustrate, one of processing module and a data stream may be associated with a first cloud-based account of domain B 11, and two remaining processing modules of domain B 11 may be associated with a second cloud-based account of domain B 11.

Processing engine 17 may contain a service integration layer 18. The service integration layer 18 is responsible for communications with local server 21. In particular, the service integration layer 18 uses APIs and/or event streaming patterns to enable standardisation and scaling for data between the processing engine 17 in the cloud computing system 10 and the local server 21. Preferably, the service integration layer 18 includes an anti-corruption layer to facilitate integration between local server 21 (which may not support event-driven applications) and the cloud computing system 10 (which does support event-driven applications) and vice versa.

In one particular consumer banking example, the cloud computing system 10 is an AWS environment. In such an example, the cloud computing system 10 includes at least two processing engines 17: processing engine A relating to financial data processing and processing engine B relating to application processing. Processing engine A 17 includes a plurality of domains 11, i.e. domains A, B, C, D... n. Such domains may include data management domains, primary domains, feature-driven domains and supplementary domains. Examples of primary domains include a payment processing domain, which manages real time account balances and supports user payment activity, and a transaction processing domain which relates to accounting and operational processing. Another example of a primary domain is an account operation domain, which controls how the execution of a process for an account is to be operated.

Processing engine B includes one domain 11, i.e. domain Z. Such a domain may be an apply domain that is used so that a new or established user can apply to receive various resources (e.g. financial resources). The apply domain may also be used to on-board new users to the cloud computing system 10.

The cloud computing system 10 also includes a data processing layer 19. The data processing layer 19 provides a common aggregation point for cloud computing system 10 for providing data to various data platforms, for further analysis and/or manipulation.

### Controlling Software Testing

The presently claimed invention controls software testing by facilitating and moderating promotions between computational environments. Specifically, the present invention controls the promotion of a version of a program from a lower test environment to a higher, production or non-production, environment. In this way, the presently claimed invention can simultaneously ensure: first, that the same version of the program is being deployed in each test environment sequentially through the use of manifest files (where the associated software test data is stored in a passport file such that it can be reviewed as required); and second, that it is correct to promote the version of the program to the higher environment by validating the promotion request. These effects cumulatively ensure that the testing pathway required for testing the version of the program is being adhered to without impingement by technical errors (such as deploying different versions of the program to different environments, leading to incomplete testing of any single version of the program) or by human error (such as the avoidance or circumvention of complete testing by an individual or team). In other words, the invention ensures complete and comprehensive testing of versions of programs, providing a single source of truth (a passport file) such that the test history for a version of a program can be reviewed, in its entirety, at any time.

The present invention relies upon two file types to function, namely manifest files (one for each environment in the test pathway) and a passport file. The passport file is a data structure comprising software test data, including promotion data, relating to the promotion of the version of the program from a lower test environment to a higher environment. Generally, the passport file is formatted as a JavaScript Object Notation (JSON) file, however any file type may be used. Additionally, the passport file is intended to act as a single-source-of-truth for promotion data relating to the version of the program. Therefore, the passport file generally comprises software test data for each environment-to-environment promotion undergone by the version of the program. Additionally, the passport file may comprise software test data for other versions of the program. In this case, promotion data in the passport file may be sorted hierarchically by version indicator (a unique indicator for each version of the program) and then by higher environment promoted to. Other file structures and formats for a passport file may be utilised and are compatible with the presently claimed invention.

Software test data is any data relating to the testing of the version of the program. Software test data may encompass versions of programs themselves, promotion data and/or data generated through testing the version of the program or data input into the version of the program for testing. However, in some embodiments, the software test data comprises only the promotion data and a version indicator for the version of the program to which the promotion data relates. The promotion data comprises information relevant to the circumstances of the promotion of the version of the program between environments, such as data relating to modification or creation of a deployment mechanism or data relating to the validation of a promotion request. Promotion data may, for each promotion undergone by a version of a program, comprise: a promotion timestamp, a promotion request sender identifier, one or more promotion approver identifiers, and/or a promotion reason. A promotion timestamp is data indicating the time at which the version of the program is promoted to, progressed to or otherwise deployed to a higher environment. A promotion request sender identifier is a unique identifier allocated to an individual (such as an administrator of an environment), team or system which originated and sent a promotion request resulting in at least an attempt to promote a version of a program to a higher environment. Similarly, a promotion approver identifier is a unique identifier allocated to an individual, team or system that approved the promotion of the version of the program to the higher environment. A promotion reason may be a freeform field, stored as a string or otherwise, in which the individuals, teams or systems that either approve or request the promotion are able to justify the promotion of the version of the program and/or leave notes which may be relevant to reviewing the test pathway using the passport file.

A manifest file is a file specific to a single environment which is intended to at least identify any software (such as the version of the program to be tested and any software elements required to support execution of the version of the program) which are or should be deployed to the environment. A manifest file at least comprises the version indicator for the version of the program which should be deployed to the environment to which the manifest file relates. This version indicator is a unique identifier used to indicate the version of the program. Generally, each manifest file is formatted as a JavaScript Object Notation (JSON) file, however any file type may be used. A manifest file will also comprise data pertaining to deploying the version of the program. In this way, the manifest file not only identifies the version of the program which should be deployed to the environment, it also comprises sufficient data for the version of the program to be deployed to the environment. Regarding software elements, if software elements exist which the version of the program is dependent upon and these software elements are not intended to be emulated when testing the version of the program, the manifest file may additionally comprise version indicators for these software elements and data pertaining to deploying these software elements. Generally, software elements upon which the version of the program is dependent should be deployed and tested with the version of the program in each version of each software element intended for use with the program. This ensures that the versions of software elements that will be used with the version of the program are compatible. In some embodiments, the data pertaining to deploying the version of the program is metadata pertaining to deploying the version of the program. In other words, the manifest file may only comprise metadata indicating how to deploy the version of the program rather than executable instructions for deploying the version of the program.

For convenience, the present invention will be discussed as applied to cloud computing systems, such as cloud computing system 10, herein. Certain benefits of the presently claimed invention, including the utility of manifest files to track and deploy software according to pipelines which utilise multiple deployment mechanisms, may only be realised in cloud computing systems. However, the invention may also be applied to any other computer system, such as local server 20 of Figure 1A and Figure 1B, for controlling software testing.

In relation to the present invention, the terms *first, second, third,* etc. may be used to describe various features. For example, a first test environment and a second test environment. Such naming is intended only to differentiate features which may be separate. The use of *first, second, third,* etc. terminology is not intended to impart an order, temporal or otherwise, on the features to which the terms relate. For completeness, the terms "higher" and "lower" are intended to imply an order, particularly in reference to environments which form part of a testing pathway. Moreover, using the provided example of a first test environment and a second test environment, the first and second test environment generally are different test environment. However, in some embodiments, the first and second test environment may be the same test environment or different instances of the same test environment. This differentiation between a first and second of a feature applies to all features which *first, second, third,* etc. is used in reference to.

### Controlling Software Testing: Architecture

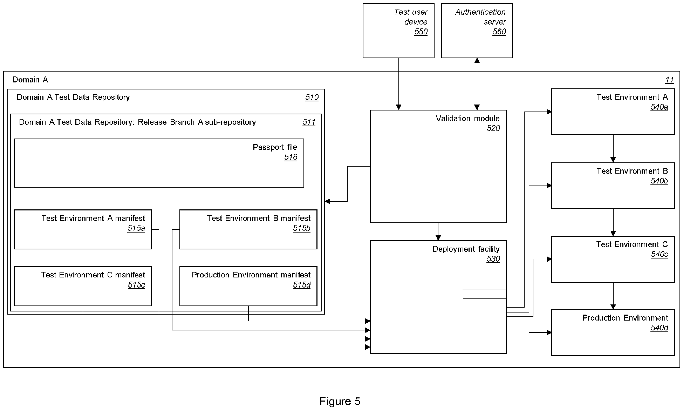

Turning to Figure 5, the architecture used to implement the invention in a domain, domain A 11, of a cloud computing system (not pictured), which may be cloud computing system 10 of Figure 3. For simplicity, Figure 5 is discussed herein as though it is implemented on cloud computing system 10. However, the architecture of cloud computing system which Figure 5 is implemented in may differ from cloud computing system 10 of Figure 3 in a number of ways. The cloud computing system may be implemented using AWS services as discussed herein. The invention does not need to be implemented in a domain. The invention may be implemented in cloud computing systems whose architectures do not include domains. Alternatively, the invention may be implemented across several domains, each containing at least one of the environments required by the test pathway. The invention according to Figure 5 may also be implemented on a local server, such as local server 20.

In Figure 5, the test pathway for the version of the program requires four environments: test environments A to C (540a, 540b, 540c) and a production environment 540d. Any number of environments greater than two may be used in conjunction with the present invention, but four environments are shown for illustrative purposes. Test environments may be implemented in any number of ways as required for the software being tested. In the present example of a cloud computing system, each environment may be a virtualised compute platform provisioned to execute the version of the program in accordance with one or more test specified in the test pathway. For example, if domain A 11 is implemented in AWS, each environment may be an AWS EC2 instance communicatively coupled with at least an AWS S3 domain datastore. An environment may further comprise an instance of a monitoring system, such as AWS CloudWatch. If the test environments A to C are implemented in AWS, the test environments may be generated within one or more test AWS accounts which form part of Domain A 11. Similarly, the production environment 540d may be generated within a production AWS account which forms part of domain A 11.

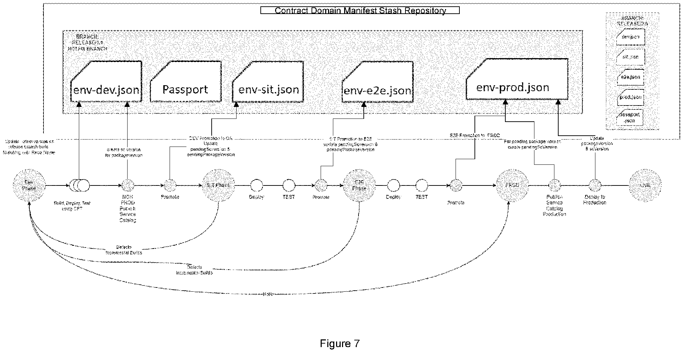

As indicated above, for the program there is one passport file 516 per release branch. Each passport file is specific to the release branch to which it pertains and, by nature of testing different version of programs in each release branch, is not the same as any other passport file. Each passport file is therefore unique to a release branch. A release branch is a software development construct designed such that versions of programs can be developed, tested or otherwise prepared separately to the most commonly used production versions of the programs before they are used to replace the same most commonly used production versions of the programs. In addition, as (in the present example) there are four environments used in implementing the test pathway, there are four respective manifest files: Test environment A manifest 515a, Test environment B manifest 515b, Test environment C manifest 515c and Production Environment manifest 515d. The number of manifest files will always be identical to the number of environments implementing a test pathway such that each environment has a corresponding manifest file. The manifest files and the passport file are stored within a test data repository 510. The test data repository may store more than one set of a passport file and manifest files (not pictured). The test data repository may therefore comprise a plurality of sub-repositories, such as release branch A sub-repository 511, each sub-repository comprising a passport file and corresponding manifest files. Each sub-repository may correspond to a release branch for the program. In the example of Figure 5, the test data repository 510 is a domain data repository, such as any storage repository configured to, persistently, store data. In some embodiments, the test data repository is hosted using Stash and/or Bitbucket. In other embodiments the passport file and manifest files may be stored as tables in one or more databases. For example, in a cloud computing environment implemented using AWS, the test data stash 510 may be implemented using Amazon Simple Storage Service (S3) or Amazon Elastic File System (EFS). Turning briefly to Figure 7, *"BRANCH:RELEASE*/*2.0"* represents a second sub-stash separate from the first sub-repository *"BRANCH:RELEASE*/*1.1""* to which the test pathway of Figure 7 pertains.

In other embodiments, the test data repository 510 may be organised in an environment-centric structure. In an environment-centric structure, each sub-repository relates to an environment and all manifest files relating to that environment are stored in the same sub-repository. All passport files in this embodiment are similarly stored in a single sub-repository configured to store only passport files.

Returning to Figure 5, the architecture used to implement the invention may comprise a deployment facility 530 that is responsible for deployment of a version of a program to a higher environment. Deploying a version of a program to a higher environment is intended to encompass all methods by which the version of the program, alone or in conjunction with other software elements, may be loaded onto memory associated with the higher environment and otherwise installed on the higher environment such that the version of the program can be executed in accordance with a test pathway. The process for deploying the version of the program or any software element is referred to as a deployment pipeline. Deployment may therefore be facilitated in a number of ways. For example, the version of the program may be stored on a deployment memory forming part of the deployment facility 530, such as optical, magnetic, solid-state or other memory types, which may be mechanically attached to a port or reader communicatively coupled to the higher environment in order to deploy the version of the program. Alternatively, the aforementioned deployment memory may be communicatively coupled to the higher environment, locally, via the internet or another network or otherwise, such that data only needs to be transferred from the deployment memory to the memory associated with the higher environment to deploy the version of the program. The deployment facility 530 may form part of a cloud controller, such as cloud controller 150, configured to execute deployment pipelines.

However, deployment to cloud-based environments, such as those discussed herein, is generally more complex and may require specialised software. This complexity is primarily due to the environments being virtualised, where the hardware used to run the cloud-computing environment is not directly accessible. For example, for environments hosted in AWS as discussed herein, the version of the program will generally be deployed with deployment pipelines which utilise AWS CloudFormation or AWS Service Catalog. AWS Cloud Formation is a template-based method of deployment. A user or system can define, as identifiers and variables stored in a template file, all the resources (including the version of the program) required for an environment and their respective parameters. The deployment pipeline for deployment with AWS Cloud Formation uses these templates to provision and initialise an instance of an environment according to the template, including installing, from one or more memories accessible by AWS CloudFormation, the version of the program and any other software or software elements required by the environment. To allow AWS CloudFormation deployments to be monitorable and to enforce adherence to testing, the template files and all files referred to in it should be versioned, thereby preventing the version of the program being tested or software elements it is dependent upon changing during testing. Conversely, AWS Service Catalog is a catalogue-based method of deploying the version of the program which is based upon AWS CloudFormation. Catalogue-based deployment relies upon a deployment catalogue having been generated prior to the instance of deployment, the catalogue may comprise a number of immutable and pre-populated deployment templates which may be called for deploying a program in the same way across different environments. One or more deployment template may be collated into a deployment catalogue product, wherein each product may be called to deploy at least a version of a program. The deployment catalogue identifies deployable versions of software via the deployment templates, such as the version of the software, which can be deployed to an environment as part of a deployment pipeline. While AWS CloudFormation and AWS Service Catalog do not directly form part of deployment facility 530, both AWS CloudFormation and AWS Service Catalog may be called and initialised by deployment facility 530 in accordance with one or more deployment pipelines such that the version of the program (and any associated software elements) may be deployed to a higher environment in accordance with a manifest file.

Generally, a combination of AWS Service Catalog and AWS CloudFormation can be utilised for different environments in a test pathway. AWS Service Catalogue and AWS CloudFormation are effectively interchangeable, each providing unique benefits, such that their use depends upon the needs of the user. AWS CloudFormation is particularly suitable for development environments, which may not have a preceding environment and may need to be initialised at the same time as deploying or developing the version of the program. However, AWS Service Catalog may be used for all subsequent promotions as this avoids the need to remake templates for each deployment, which may be a source of errors, and ensures that the version of the program is the same being deployed to each environment (i.e. the version of the program can be deployed from the same deployment catalogue to each environment). Similarly, for flexible and scalable deployment in production, the use of a deployment catalogue is pragmatic, therefore, by deploying the version of the program to test environments using a deployment catalogue, the deployment of the version of the program is also tested to ensure it functions correctly. AWS Service Catalog and AWS Cloud Formation allow only the program (and software elements that have changed) in an environment to be replaced, thereby improving computational efficiency, reducing deployment time and mitigating errors in testing introduced through deployment. In one embodiment, the version of the program may be deployed to a development environment using AWS CloudFormation. Once the version of the program is ready to be promoted to the next test environment, a test deployment catalogue product may be generated comprising means for deploying the version of the program. This test deployment catalogue product is stored in a test deployment catalogue, which is a deployment catalogue comprising means for deploying the version of the program, and any other software elements required to test the version of the program, in deployable forms (i.e. saved in a format which can be installed on an environment) for deployment to each test environment. Once all tests are complete, with each test environment deploying the version of the program from the test deployment catalogue, a production deployment catalogue product can be generated such that the tested version of the program can be identically deployed to all production environments. As with the test deployment catalogue product, the production deployment catalogue product is stored in a production deployment catalogue, which is a deployment catalogue comprising the tested version of the program alongside any accompanying software elements required by the program for deployment onto production environments. The test deployment catalogue and the production deployment catalogue may differ in terms of accessibility by production environments (where the test deployment catalogue is not accessible by production environments to prevent the deployment of untested software to a production environment) and the production deployment catalogue may comprise additional software which was not relevant to testing but is used in the production environment. In this way, development environments can be provided with the flexibility required by developers to produce new versions of programs while also providing certainty that the same version of the program is deployed to each subsequent test environment through the use of catalogue-based deployment. By creating a production deployment catalogue product the version of the program can be readied for production and the production deployment catalogue can comprise software elements which were not necessary for testing the version of the program, thereby allowing deployment catalogues to be used in production environments. Additionally, as deployment catalogues can be isolated to a single AWS account, test AWS accounts may only have test deployment catalogues published on them, while production AWS accounts may only have production deployment catalogues published on them, thereby preventing software undergoing software testing from being deployed to a production environment from a test deployment catalogue.

If a test deployment catalogue product is published during the promotion from the lower test environment to the higher environment, the promotion data may further comprise one or more of: a test deployment catalogue product publication timestamp, a test deployment catalogue product publisher identifier and/or a test deployment catalogue product publication version identifier. The test deployment catalogue product publication timestamp comprises time data indicating the time at which the test deployment catalogue product was published. Deployment catalogue product publication refers to the time at which the deployment catalogue product is made available for pulling software and/or software elements from. The test deployment catalogue product publisher identifier is a unique identifier which indicates the individual, team or system responsible for publishing the test deployment catalogue product. The test deployment catalogue product publication version identifier is a unique identifier indicating the test deployment catalogue and the version of this test deployment catalogue product which was published on correspondence with the version of the program. Further additionally, if a production deployment catalogue product is published during the promotion from the lower test environment to the higher environment, the promotion data may further comprise one or more of: a production deployment catalogue product publication timestamp, a production deployment catalogue product publisher identifier and/or a production deployment catalogue product publication version identifier. The production deployment catalogue product publication timestamp, the production deployment catalogue product publisher identifier and the production deployment catalogue product publication version identifier are equivalent (for the production deployment catalogue product) to the test deployment catalogue product publication timestamp, test deployment catalogue product publisher identifier and the test deployment catalogue product publication version identifier respectively.

With reference again to Figure 5, deployment facility 530 is communicatively coupled to the validation module 520 and is configured to, upon receiving instruction from the validation module 520 to deploy the version of the program, initiate and execute deployment pipelines to deploy the version of the program and any other required software elements to an environment. For this reason, the data pertaining to deploying the version of the program may comprise a type indicator and/or a deployment mechanism identifier. The type indicator may indicate how the version of the program is implemented. For example, the type indicator may be one of: AWS Lambda, AWS ECS, Service Catalogue, Glue, or any other suitable program type for implementing the version of the program. Equally, other software elements may have type indicators associated with them in the manifest file. In some embodiments, the APP-CFN type indicator is particularly relevant to the other software elements. APP-CFN is a type indicator intended as a broad group covering any version of the program or software element which does not require compute provisioning. For example, APP-CFN supports at least AWS DynamoDB, AWS SSM, AWS Glue Schemas, and AWS Secrets Manager. In other embodiments, the other software elements are not programs, the type indicator will change accordingly. For example, if a software element is a database, the type indicator for that software element will indicate "DATABASE" or the software used to store that database for access by the version of the program, for example, AWS S3 or AWS DynamoDB. In general, type indicators may be defined as required depending upon the software being tested. The type indicator therefore allows the deployment facility 530 to determine which deployment pipeline to use for the version of the program and each software element. The deployment mechanism identifier will in turn identify the way in which a deployment pipeline should deploy the version of the program or another software element. Specifically, the deployment mechanism identifier may indicate a template-based deployment software, such as AWS CloudFormation, or a catalogue-based deployment software, such as AWS Service Catalog.

In addition, the manifest file may comprise one or more of the following data types for the version of the program and each other software element specified therein: a deployment catalogue product identifier, a deployment catalogue version identifier, a deployment storage repository address, a software name, a deployment catalogue provisioned name, a deployment catalogue published name, a path address for deployment catalogue parameters, a parameter repository name for the deployment catalogue parameters and/or a deployment catalogue branch identifier. The deployment storage repository address may indicate the memory or storage address within which the version of the program (or other software element to which it refers) is stored, for example it may indicate a code repository. The software name may identify the overall name of every version of the program (or other software element). Generally, the software name is unique for each program. In combination with the version indicator for the version of the program (or other software element), these variables serve to identify the version and the program (or other software element) which the entry in the manifest file is referring to, both for users and the deployment facility 530. However, the deployment catalogue product identifier may be used to identify the deployment catalogue product corresponding to the version of the program (or other software element) in the deployment catalogue which the version of the program (or other software element) can be deployed via. The deployment catalogue version identifier and the deployment catalogue published name respectively indicate the version of the deployment catalogue and the name of the deployment catalogue from which the software element should be deployed. The path address for deployment catalogue parameters and the parameter repository address for the deployment catalogue parameters may respectively indicate the memory address or memory path to a parameter repository and the name of the parameter repository within which parameters for the deployment catalogue are stored. Finally, the deployment catalogue branch identifier indicates the branch of the deployment catalogue comprising data for the desired set of software elements to be tested. In general, each version of the program has associated with it at least a software name and a deployment catalogue product identifier suitable for identifying the deployment catalogue product suitable for deploying the version of the program. In some embodiments, the code repository stores the source code for the version of the program, this source code may be built by a CI pipeline and used to create a deployment catalogue product.

Further additionally, each manifest file may comprise (for the version of the program being tested) one or more of: a pending deployment catalogue version identifier and a pending version indicator for the program. These parameters of the manifest file identify the version of the deployment catalogue and the version number for the version of the program (respectively) for the version of the program in a higher environment when its promotion to the higher environment has been approved but when the version of the program has not yet been deployed. Once the version of the program is deployed in the higher environment, the pending version indicator for the program is copied into the version identifier for the program in the same manifest file while the pending deployment catalogue version identifier is copied into the deployment catalogue version identifier for the program in the same manifest file.

The validation module 520 is configured to obtain a promotion request and validate this promotion request, in collaboration with authentication server 560 or otherwise. For these purposes, validation module 520 may be communicatively coupled to one or more user device 60, such as test user device 550. Test user device 550 is the device utilised by the developer or other person administering the software testing who originates a promotion request. Similarly, validation module 520 may be communicatively coupled with authentication server 560. In some embodiments, authentication server 560 may not be utilised such that validation of the promotion request is processed entirely by the validation module 520. However, in order to improve security by decoupling some or all of the validation of the promotion request from the cloud computing system 10, a local server 21, such as authentication server 560, may be used for validation of the promotion request. In this way, even if the cloud computing system 10 or Domain A 11 is compromised, the process required to authenticate promotion requests for software testing cannot be manipulated, thereby preventing new software from being deployed by unauthorised individuals. The validation module may be any type of compute software for at least executing instructions necessary to obtain a promotion request and, at least in part, validate this promotion request.

Furthermore, in some embodiments, the validation module 520 may be configured to store, to any of the manifest files 515a-515d, data comprising at least a version indicator for the version of the program. In these embodiments, the validation module is communicatively coupled to the Domain A test data repository 510 and is configured to write data to and/or modify data in any of the manifest files stored in Domain A test data repository 510. Additionally or alternatively, the validation module 520 may be communicatively coupled to the deployment facility 530 so that, if the promotion request is validated successfully, deployment of the version of the program to a higher environment can be initiated. In other embodiments, the authentication server 560 may be communicatively coupled to the deployment facility 530.

Depending on system architecture for the cloud computing system 10 and domain A 11, alongside the level of automation which the cloud computing system 10 is configured to facilitate, one or more of the configured purposes of the validation module 520, such as storing data to manifest files, may be performed manually. This manual performance is less desirable than full automation of the validation module from an efficiency perspective. However, as long as the validation of the promotion request is controlled at least in part by validation module 520 and/or authentication server 560, the security benefits provided by the disclosed method for controlling software testing will not be impacted.

Additionally or alternatively, in some embodiments, the validation module 520 may also take the place of administrators for approving the promotion request. This is only possible if the testing in the lower environment is fully automated and the result of this testing is entirely positive. If this is the case, the validation module may approve the promotion request without requiring approval from any administrator. In this embodiment, the deployment of the version of the program to the higher environment may also trigger automated testing in the higher environment. Moreover, in this embodiment, the completion of the automated testing may also automatically generate and send a promotion request for promoting the tested version of the program to the higher environment.

As disclosed hereinabove authentication server 560 may be used to facilitate validation of the promotion request. The authentication server 560 may be a local server 21 so that it can be positioned outside of cloud computing system 10 and physically secured. Alternatively, authentication system 560 may form part of cloud computing system 10 or a different, separate, cloud computing system. The authentication server 560 may comprise at least one reference credential directory containing credentials against which credentials provided by administrators of cloud computing system 10 can be checked and thereby verified. Generally, the authentication server comprises a reference credential directory identifying groups of credentials or login details as belonging to administrators. In this embodiment, the authentication server may be used to at least check the credentials or login details associated with a promotion request approval. Optionally, the reference credential directory may be used to identify appropriate administrators for providing promotion request approval. An administrator may be any user or device with administrative control over at least one test environment or production environment involved in the testing pathway of the version of the program. If an administrator is a human user, they may interact with the cloud-computing system or any local server, such as authentication server 560, via a user device, such as user device 60. If the administrator is neither an administrator of the lower environment which the version of the program is being promoted from (referred to herein as a lower environment administrator) or an administrator of the higher environment which the version of the program may be promoted to (referred to herein as a higher environment administrator), the administrator is referred to as a supervising administrator. Supervising administrators may be administrators of a production environment to which the version of the program could be deployed after testing, and therefore provide a party not involved in the software testing itself but with a vested interest in ensuring that the software testing is comprehensive and complete. Alternatively, the supervising administrator may be an administrator of a lower test environment which the version of the program has already been promoted from. For example, a supervising administrator may be an administrator of a development environment. The credentials associated with each administrator may be a signed token, an email address from which instructions are received, a user identifier, a secret identifier, a password or any other suitable form of credentials or login details. Generally, a user identifier, such as a Jenkins user identifier, is used as the credential for an administrator.

### Controlling Software Testing: Environment-to-environment Promotion

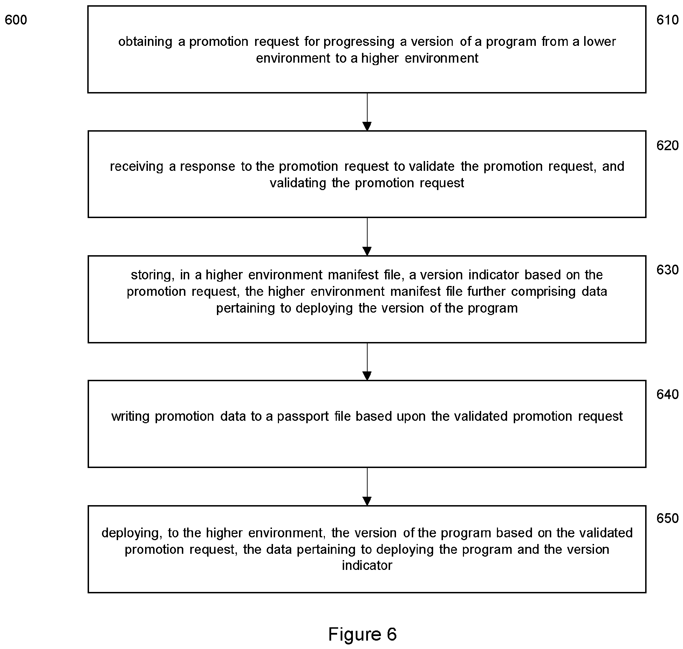

Figure 6 shows a flow diagram illustrating an exemplary method 600 according to the invention for controlling software testing through promotion of a version of a program between a lower test environment and a higher environment.

Method 600 begins at step 610 where a promotion request for progressing a version of a program, from a lower environment to a higher environment, is obtained. A promotion request is any data packet comprising information indicative of a request for the version of the program on the lower environment to be deployed on a higher environment. The promotion request does not need to identify the version indicator for the version of the program, as there may only be one version of the program deployed on the lower environment. Similarly, the promotion request does not need to explicitly request promotion since receipt of the promotion request itself may indicate this intention. Generally, the lower and higher environment need to be specified in the promotion request alongside the a version indicator for the version of the program (for identifying the program version to be promoted this may be a deployment catalogue version identifier), a software name for the version of the program (for identifying the program corresponding to the version to be promoted - this may be a deployment catalogue product identifier), a reason for the promotion. Generally, the promotion request should also comprise a path, such as a link, to enable approval to be provided by at least one administrator. The promotion request will comprise at least one of: one or more credentials for the test user or test user device 550 originating the promotion request, a version indicator for the version of the program, a software name for the version of the program, a lower environment identifier indicating the lower environment which the version of the program is requested to be promoted from, and a higher environment identifier for the higher environment which the version of the program is requested to be promoted to.

The promotion request can be sent from test user device 550 as an API call, an event to be posted on an event stream, an email or in any other suitable means of transmitting data. Preferably, the promotion request is sent in email format or otherwise sent as an email or as a file attached to an email.

The promotion request may be received at the validation module 520. Alternatively, the promotion request may be received at authentication server 560. In either case, the promotion request is ingested into a computer system which is at least communicatively coupled to cloud computing system 10 so that steps 620 to 650 of method 600 can proceed.

Step 620 involves receiving a response to the promotion request to validate the promotion request and, then validating the promotion request. Generally, a promotion request will require promotion request approval from at least one administrator, the at least one promotion request approval taking the form of a response to the promotion request. In some embodiments, a push notification may be to each administrator from which promotion request approval is required. Promotion request approval may be received as a response to the push notification via an API or otherwise. In other embodiments, the promotion request may be sent to the one or more administrators responsible for approving the promotion request. For example, if the promotion request is an email or is otherwise encapsulated in an email, the administrators responsible for approving the promotion request may also be addressees of the promotion request email. Moreover, the responses of the one or more administrators comprising promotion request approval may also be sent as emails or otherwise encapsulated in emails. In other embodiments, the validation module 520 or authentication server 560 may request (for example, by sending one or more emails) approval for the promotion request from the one or more administrators.

In one specific example, a first promotion request approval is required from a lower environment administrator, a second promotion request approval is required from a higher environment administrator and, optionally, a third promotion request approval is required from a supervising administrator. Each promotion request approval is requested from the relevant administrator individually.

At step 620, the promotion request is also validated. Generally, validating the promotion request at least requires comparing credentials provided in each promotion request approval to a reference credential directory, stored on the validation module 520, the authentication server 560 or otherwise. Comparing the credentials to the reference credential directory may require matching the credentials in a promotion request approval to a copy of the credentials stored in the reference credential directory and then identifying whether the originator of the promotion request approval is authorised to approve the promotion request based upon the identity and corresponding privileges associated with the copy of the credentials in the reference credential directory. This process of comparing the credentials to the reference credential directory may herein be referred to as validating the credentials. If any of the credentials (and therefore the promotion request approvals) cannot be validated in this way, the promotion request cannot be validated and the method will end. In this case, a notification may be sent to the test user device 550 indicating that the promotion of the version of the program was unsuccessful. The notification may further indicate the administrator whose credentials could not be validated with respect to the reference credential directory.

Each administrator may also send a response comprising promotion request disapproval. In some embodiments, promotion request disapproval may be compared to the reference credential directory in the same way as promotion request approval. Alternatively, promotion request disapproval may result in failure to validate the promotion request without the comparison of credentials to the reference credential directory. Promotion request disapproval by any administrator will also result in failure to validate the promotion request. The notification sent to a test user 550 in the event that at least one administrator responds with promotion request disapproval, may identify that promotion request disapproval was received. Additionally, the notification may indicate the at least one administrator originating the promotion request disapproval and/or a reason for promotion request disapproval if provided in the administrator's response.

Validating the promotion request may further comprise checking credentials comprised in the promotion request to the reference credential directory identically to the credentials of the administrators. In this way, it can be ensured that the test user was responsible for issuing the promotion request, thereby improving security.

Step 630 comprises storing, in a manifest file associated with the higher environment (herein referred to as the higher environment manifest file), a version indicator based on the promotion request, the higher environment manifest file further comprising data pertaining to deploying the version of the program. The version indicator and the data pertaining to deploying the version of the program may be extracted from or otherwise based upon the data contained in the promotion request. Additionally or alternatively, the version indicator and the data pertaining to deploying the version of the program may be retrieved from another manifest file, such as a manifest file corresponding to the lower environment (herein lower environment manifest file). Further additionally, the version indicator and/or the data pertaining to deploying the version of the program may be, at least in part, manually input (separately from the promotion request, via the test user device 550 or otherwise) for storage on the higher environment manifest file. While an automated approach, which minimises opportunity for human or other third-party inputs to be stored on a manifest file, improves system security, any modification of the manifest files still requires a validated promotion request before deployment and data relating to the promotion will be recorded in the passport file and manifest file. Therefore, irrespective of the way or the degree of automation involved in storing data to the higher environment manifest file, the method 600 maintains a traceable, auditable way of controlling software testing which serves to ensure software has completed testing specified in a testing pathway before it is deployed to production. Generally, the validation module 520 stores the version indicator and the data pertaining to deploying the version of the program to the higher environment manifest file.

Generally, steps 620 and 630 should occur in order, i.e. the present ordering of step 620 followed by step 630 in Figure 6. This is to ensure the promotion request is validated before any edits which may provide a route for deploying the version of the program are made to the manifest file associated with the higher environment, thereby improving system security and reducing the risk of erroneous promotion of the version of a program. However, in some embodiments, steps 620 and 630 may occur simultaneously or step 630 may precede step 620.

At step 650, the version of the program is deployed to the higher environment based on the validated promotion request, the data pertaining to deploying the program and the version indicator. The deployment is triggered in response to the validated promotion request. The triggering of step 650 may be actioned by the validation module 520, authentication server 560 or manually, so long as the promotion request is validated. The triggering of the deployment may comprise a data packet being sent to the deployment facility 530 via a message queue, event stream, API or otherwise. Deployment facility 530 may, in some embodiments, form part of a cloud controller such as cloud controller 150. Once triggered, the version of the program may be deployed optionally alongside any other software elements specified in the manifest file for the higher environment which are required for testing the version of the program. In other words, once step 650 is triggered, deployment pipelines will be executed for the at least the version of the program and optionally any supporting software elements identified in the higher environment manifest file. The deployment pipelines used for the version of the program and each associated software element may be selected from a plurality of deployment pipelines based upon the type indicator for the version of the program and each software element.

The deployment pipelines used in deployment facility 530 are chosen and configured based upon the data pertaining to deploying the version of the program and the equivalent data stored in the higher environment manifest file for any supporting software element. For example, the type indicator may be used, in combination with other data pertaining to deploying the version of the program or otherwise, to identify the deployment pipeline to use for deploying the version of the program.

In some embodiments, particularly where a deployment catalogue is used to deploy the version of the program, the version of the program and/or any supporting software element may be deployed to an existing test environment. Alternatively, deploying the version of the program may comprise initiating a new test environment. In addition, once deployed, the version indicator in the higher environment manifest file may be compared to the version indicator of the version of the program deployed to the higher environment to validate that the correct version of the program was deployed.

The present invention may be repeated several times in order to complete each promotion between test environments (and eventually to one or more production environment). For example, in Figure 7, a simplified testing pathway, implemented using the embodiments of the present invention, is shown. The testing pathway in Figure 7 starts at a development phase in a development environment where a version of the program is built (in conjunction with being deployed to the development environment and tested as is necessary to build the version of the program) using Amazon CloudFormation templates. At the same time as the version of the program is built, a manifest file for the development environment can be generated (automatically through continuous-integration pipelines used to build the version of the program or otherwise). Once the version of the program has been built in the development phase at least one non-production (or test) deployment catalogue product, corresponding to the at least the version of the program, is created and published to a non-production (or test) deployment catalogue via Amazon Service Catalog.

After this, the development phase of the testing pathway can be completed by promoting the version of the program from the development environment to a Systems Integration Testing (SIT) test environment such that the SIT phase can begin. The promotion may be completed in accordance with, for example, the method of Figure 6. During this promotion, the higher environment manifest file is the "env-sit.json" manifest file and the lower environment manifest file is the "env-dev.json" manifest file. The non-production deployment catalogue is used to deploy the version of the program to the SIT test environment. Once deployed to the SIT environment, the version of the program will undergo SIT testing. In accordance with step 640 of method 600, promotion data for the development environment to SIT test environment will be recorded in the passport file.

Once SIT testing has been completed, the SIT phase can be completed by promoting the version of the program from the development to an end to end (E2E) test environment such that the E2E phase can begin. Similarly, to the promotion from the development environment to the SIT test environment, the promotion from the SIT test environment to the E2E test environment may be completed with the method of Figure 5. During this promotion, the higher environment manifest file is the "env-e2e.json" manifest file and the lower environment manifest file is the "env-sit.json" manifest file. The non-production deployment catalogue is used to deploy the version of the program to the E2E test environment. Once deployed to the E2E environment, the version of the program will undergo E2E testing. In accordance with step 640 of method 600, promotion data for the SIT test environment to the E2E test environment will be recorded in the passport file.

In the embodiment of Figure 7, the E2E test environment is the final test environment that needs to be promoted to before the version of the program can be promoted to a production (prod) environment, as the E2E testing is the final testing which needs to be completed. Therefore, when promoting from the E2E test environment to a higher environment (a production environment) a production deployment catalogue product, relating to the (now fully tested) version of the program, will need to be generated and published to a production deployment catalogue (using Amazon Service Catalog). Any subsequent deployment of the version of the program to a production environment can be achieved by deployment from the production deployment catalogue; the production deployment catalogue product(s) need to the generated only one time for one production deployment catalogue which can then be used for all deployments of the version of the program to a production environment. Other than generating the production deployment catalogue product, the version of the program can be promoted in accordance with method 600 of figure 6 such that step 640 involves the deployment of the version of the program from the production deployment catalogue instead of the non-production deployment catalogue as in previous promotions. During this promotion, the higher manifest file is the "env-prod.json" manifest file and the lower environment is the "env-prod.e2e" manifest file. In accordance with step 640 of method 600, promotion data for the SIT test environment to E2E test environment will be recorded in the passport file.

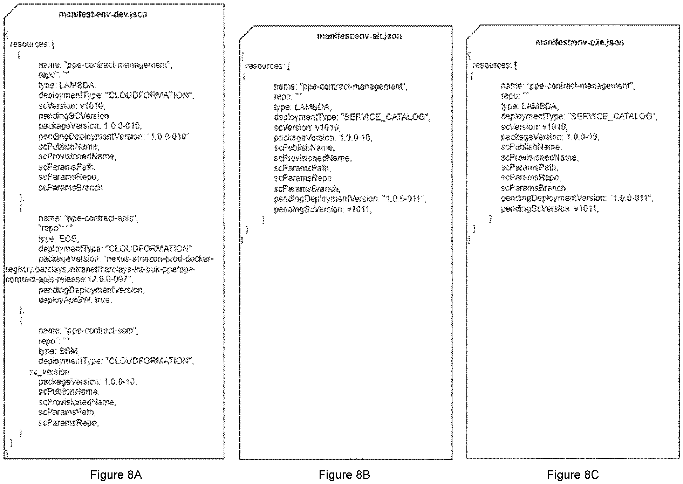

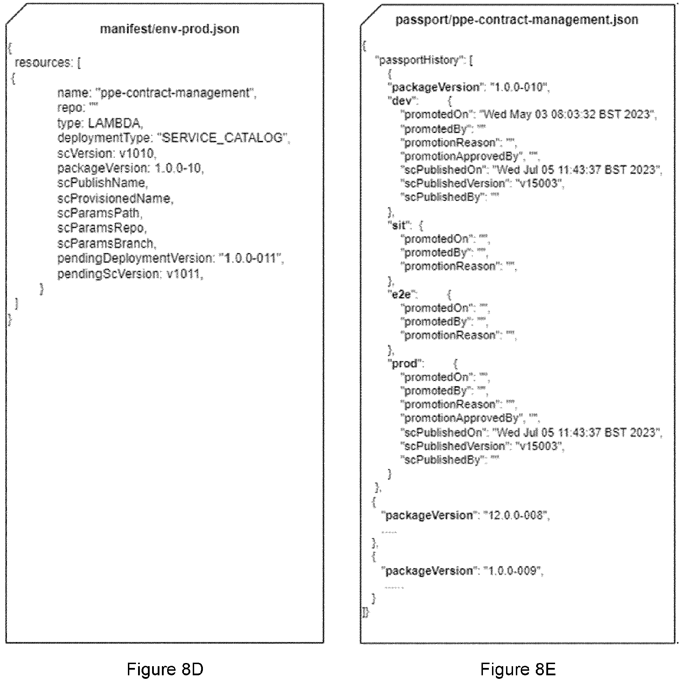

Figures 8A to 8D show exemplary data contents for each of the manifest files referenced in Figure 7. Similarly, Figure 8E is an exemplary depiction of the data content of the passport file used in reference to the testing pathway shown in Figure 7.

Figures 8A to 8D all show manifest files using the same field naming conventions. Notably the manifest file in Figure 8A also comprises data for software elements upon which the version of the program is dependent. In this embodiment "*name*" is the field for the software name, "*package Version*" is the field for the version indicator, "*type*" is the field for the type indicator, "*deploymentType*" is the field for the deployment mechanism identifier, "*repo*" is the field for the deployment storage repository address, "*scVersion*" is the field for the deployment catalogue version identifier, "*scPublishName*" is the field for the deployment catalogue published name, "*scProvisionedName*" is the field for the deployment catalogue provisioned name, "*scParamsPath*" is the field for the path address for deployment catalogue parameters, "*scParamsRepo*" is the field for the parameter repository name for the deployment catalogue parameters and "*scParamsBranch*" is the field for the deployment catalogue branch identifier. Additionally, "*pendingDeploymentVersion*" is the field for the pending production version indicator for the program and "*pendingScVersion*" is the field for the pending production deployment catalogue version identifier.

Turning to Figure 8E, the "*passport*/*ppe-contract-management.json*" file is a passport file in JSON format. The passport history comprises several sets of software test data, one for each version of the program which has undergone at least one promotion from a lower environment to a higher environment. The "packageVersion" is the version indicator for the version of the program and for each version indicator, promotion data is organised by higher environment in each environment-to-environment promotion. In this embodiment, "*promotedOn*" is the field for the promotion timestamp, "*promotedBy*" is the field for the promotion request sender identifier, "*promotionApprovedBy*" is the field for the one or more promotion approver identifiers, and/or "*promotionReason*" is the field for the promotion reason. In addition, "*scPublishedOn*" is the field for the test/production deployment catalogue publication timestamp, "*scPublishedBy*" is the field for the test/production deployment catalogue publisher identifier and/or "*scPublishedVersion*" is the field for the test/production deployment catalogue publication version identifier.

### General

The invention can take the form of an entirely hardware embodiment, an entirely software embodiment or an embodiment containing both hardware and software elements. In a preferred embodiment, the invention is implemented in software.

Furthermore, the invention can take the form of a computer program embodied as a computer-readable medium having computer executable code for use by or in connection with a computer. For the purposes of this description, a computer readable medium can be any tangible apparatus that can contain, store, communicate, propagate, or transport the program for use by or in connection with the computer. Moreover, a computer-readable medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk-read only memory (CD-ROM), compact disk-read/write (CD-R/W) and DVD.

The flow diagrams in the figures illustrate the architecture, functionality, and operation of possible implementations of the methods of the invention. In some alternative implementations, the steps noted in the figures may occur out of the order noted in the figures. For example, two steps shown in succession may, in fact, be performed substantially concurrently, or the blocks may sometimes be performed in the reverse order, depending upon the functionality involved.

It will be understood that the above description of is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the scope of this invention.

### Embodiments

The following list provides embodiments of the invention and forms part of the description. These embodiments can be combined in any compatible combination beyond those expressly stated. The embodiments can also be combined with any compatible features described herein:
1. A computer implemented method for controlling software testing, wherein software test data for a program is stored in a passport file on a memory associated with a lower environment and a higher environment, wherein the lower environment is a test environment, the memory further comprising a higher environment manifest file, the method comprising:
   I. obtaining a promotion request for progressing a version of a program from the lower environment to the higher environment;
   II. receiving a response to the promotion request to validate the promotion request, and validating the promotion request;
   III. storing, in the higher environment manifest file, a version indicator based on the promotion request, the higher environment manifest file further comprising data pertaining to deploying the version of the program;
   IV. writing promotion data to the passport file based upon the validated promotion request; and
   V. deploying, to the higher environment, the version of the program based on the validated promotion request, the data pertaining to deploying the program and the version indicator.
2. The method of embodiment 1, wherein obtaining the promotion request comprises receiving the promotion request as an email.
3. The method of embodiment 1 or embodiment 2, wherein each manifest file is a JavaScript Object Notation, JSON, file.
4. The method of any preceding embodiment, wherein the data pertaining to deploying the version of the program is metadata pertaining to deploying the version of the program.
5. The method of any preceding embodiment, wherein the data pertaining to deploying the version of the program comprises a deployment mechanism identifier.
6. The method of embodiment 5, wherein the deployment mechanism identifier indicates the software configured for deployment of the version of the program.
7. The method of embodiment 6, wherein deploying, to the higher environment, the version of the program comprises deploying the version of the program using a deployment template, optionally wherein the software configured for deployment of the version of the program is AWS CloudFormation.
8. The method of embodiment 6, wherein deploying, to the higher environment, the version of the program comprises deploying the version of the program from a deployment catalogue, optionally wherein the software configured for deployment of the version of the program is AWS Service Catalog.
9. The method of any preceding embodiment, wherein the data pertaining to deploying the version of the program comprises a type indicator.
10. The method of embodiment 9, wherein the type indicator may specify one of the following program types: AWS Lambda, AWS ECS, Service Catalogue, Glue, APP-CFN, or any other suitable program type.
11. The method of any preceding embodiment, wherein the data pertaining to deploying the version of the program comprises a deployment storage repository address.
12. The method of any preceding embodiment, wherein, for each software element related to the program, each manifest file comprises one version indicator and data pertaining to deploying the software element.
13. The method of embodiment 12, wherein the software elements are configured to be deployed on the same domain as the program.
14. The method of embodiment 13, wherein one or more of the software elements may be dependent upon the version of the program and/or wherein the version of the program may be dependent upon one or more of the software elements.
15. The method of any preceding embodiment, wherein the data pertaining to deploying the version of the program comprises a version indicator for the program.
16. The method of embodiment 15, wherein the data pertaining to deploying the version of the program further comprises a deployment catalogue version identifier.
17. The method of any preceding embodiment, wherein the manifest file further comprises one or more of the following: a deployment catalogue product identifier for the version of the program, a deployment catalogue provisioned name, a software element name, a path address for deployment catalogue parameters, a parameter repository name for the deployment catalogue parameters and/or a deployment catalogue branch identifier.
18. The method of any preceding embodiment, wherein the lower environment is a development environment for program development and, optionally, wherein the memory comprises a lower environment manifest file, the method further comprising the step of:
   populating the lower environment manifest file with the version indicator based on one or more continuous integration pipelines.
19. The method of embodiment 18, further comprising:
   generating a test deployment catalogue product comprising the version of the program from the lower environment; and
   publishing the test deployment catalogue product to a test deployment catalogue.
20. The method of embodiment 19, wherein the test deployment catalogue product is not modifiable after generation.
21. The method of embodiment 19 or embodiment 20, wherein the test deployment catalogue is suitable for deploying the version of the program to any test environment.
22. The method of any of embodiment 19 to embodiment 21, wherein the passport file comprises a test deployment catalogue product publication timestamp, a test deployment catalogue product publisher identifier and a test deployment catalogue product publication version identifier.
23. The method of any preceding embodiment, wherein the higher environment is a production environment.
24. The method of embodiment 23, further comprising:
   publishing a production deployment catalogue product to a production deployment catalogue for deploying the version of the program to the production environment.
25. The method of embodiment 24, wherein the passport file comprises a production deployment catalogue product publication timestamp, a production deployment catalogue product publisher identifier and a production deployment catalogue product publication version identifier.
26. The method of embodiment 24 or 25, wherein the version of the program is deployed to the production environment from the published production deployment catalogue.
27. The method of any of embodiment 24 to embodiment 26, wherein the version of the program comprises a pending production deployment catalogue product version identifier and a pending production version indicator for the program.
28. The method of embodiment 27, wherein the pending production deployment catalogue product version identifier is allocated to the published production deployment catalogue product and the pending production version indicator for the program is allocated to the version of the program in the published production deployment catalogue product.
29. The method of any of embodiment 1 to embodiment 22, wherein the higher environment is a second test environment.
30. The method of any preceding embodiment, wherein the lower environment and the higher environment are cloud-based environments.
31. The method of any preceding embodiment, further comprising:
   verifying that the version of the program corresponding to the version indicator has been deployed on the higher environment based on the higher environment manifest file.
32. The method of any preceding embodiment, wherein the higher environment manifest file comprises a type indicator for the version of the program, and wherein deploying, to the higher environment, the version of the program further comprises:
   initiating and orchestrating a deployment pipeline for deploying the version of the program to the higher environment, wherein the deployment pipeline is selected from a plurality of deployment pipelines based on the type indicator for the version of the program.
33. The method of any preceding embodiment, wherein validating the promotion request comprises:
   requesting a first promotion request approval from a lower environment administrator; and
   receiving the first promotion request approval from the lower environment administrator.
34. The method of embodiment 33, wherein validating the promotion request comprises:
   requesting a second promotion request approval from a higher environment administrator; and
   receiving the second promotion request approval from the higher environment administrator.
35. The method of embodiment 33 or embodiment 34, wherein validating the promotion request comprises:
   requesting a third promotion request approval from a supervising administrator; and
   receiving a third promotion request approval from the supervising administrator.
36. The method of embodiment 35, wherein the supervising administrator is an administrator of an environment which is neither the higher environment nor the lower environment.
37. The method of any of embodiment 33 to embodiment 36, wherein the first promotion request approval comprises first credentials associated with the lower environment administrator and the second promotion request approval comprises second credentials associated with the higher environment administrator, and wherein a reference credential directory containing credentials for each administrator of each environment is stored in the memory, the method further comprising:
   validating the first credentials and the second credentials against the credentials in the reference credential directory.
38. The method of embodiment 37, wherein the first credentials and the second credentials may be email addresses.
39. The method of any of embodiment 33 to embodiment 38, wherein requesting promotion request approval comprises sending an email, within which the request for promotion request approval is encoded.
40. The method of any preceding embodiment, wherein the promotion data comprises at least one of: a promotion timestamp, a promotion request sender identifier, one or more promotion approver identifier, and/or a promotion reason.
41. The method of any preceding embodiment, wherein the passport file comprises promotion data for each promotion the version of the program undergoes.
42. The method of any preceding embodiment, wherein the passport file and each manifest file are unique to a release branch.
43. A computer program product comprising instructions which, when executed by a computer system, cause the computer system to perform the steps of any preceding embodiment, optionally wherein the computer system is a cloud computing system.
44. A (non-transitory) computer readable medium comprising instructions which, when executed by a computer system, cause the computer system to perform the method of any of embodiments 1 to 42, optionally wherein the computer system is a cloud computing system.
45. A computer system, the computer system comprising at least one processor, wherein the at least one processor is configured to perform the method of any of embodiments 1 to 42, optionally wherein the computer system is a cloud computing system.

## Claims

1. A computer implemented method for controlling software testing, wherein software test data for a program is stored in a passport file on a memory associated with a lower environment and a higher environment, wherein the lower environment is a test environment, the memory further comprising a higher environment manifest file, the method comprising:
obtaining a promotion request for progressing a version of a program from the lower environment to the higher environment;
receiving a response to the promotion request to validate the promotion request, and validating the promotion request;
storing, in the higher environment manifest file, a version indicator based on the promotion request, the higher environment manifest file further comprising data pertaining to deploying the version of the program;
writing promotion data to the passport file based upon the validated promotion request; and
deploying, to the higher environment, the version of the program based on the validated promotion request, the data pertaining to deploying the program and the version indicator.

2. The method of claim 1, wherein the data pertaining to deploying the version of the program is metadata pertaining to deploying the version of the program.

3. The method of any preceding claim, wherein the lower environment is a development environment for program development and, optionally, wherein the memory comprises a lower environment manifest file, the method further comprising the step of:
populating the lower environment manifest file with the version indicator based on one or more continuous integration pipelines.

4. The method of any preceding claim, wherein the higher environment is a production environment.

5. The method of any of claim 1 to claim 3, wherein the higher environment is a secondary test environment.

6. The method of any preceding claim, wherein the lower environment and the higher environment are cloud-based environments.

7. The method of any preceding claim, further comprising:
verifying that the version of the program corresponding to the version indicator has been deployed on the higher environment based on the higher environment manifest file.

8. The method of any preceding claim, wherein the higher environment manifest file comprises a type indicator for the version of the program, and wherein deploying, to the higher environment, the version of the program further comprises:
initiating and orchestrating a deployment pipeline for deploying the version of the program to the higher environment, wherein the deployment pipeline is selected from a plurality of deployment pipelines based on the type indicator for the version of the program.

9. The method of any preceding claim, wherein validating the promotion request comprises:
requesting a first promotion request approval from a lower environment administrator and a second promotion request approval from a higher environment administrator; and
receiving a first promotion request approval from the lower environment administrator and a second promotion request approval from the higher environment administrator.

10. The method of claim 9, wherein the first promotion request approval comprises first credentials associated with the lower environment administrator and the second promotion request approval comprises second credentials associated with the higher environment administrator, and wherein a reference credential directory containing credentials for each administrator of each environment is stored in the memory, the method further comprising:
validating the first credentials and the second credentials against the credentials in the reference credential directory.

11. The method of any preceding claim, further comprising:
generating a test deployment catalogue product comprising the version of the program from the lower environment; and
publishing the test deployment catalogue product to a test deployment catalogue.

12. The method of any preceding claim, wherein the passport file and each manifest file are unique to a release branch.

13. A computer program product comprising instructions which, when executed by a computer system, cause the computer system to perform the steps of any preceding claim, optionally wherein the computer system is a cloud-based system.

14. A (non-transitory) computer readable medium comprising instructions which, when executed by a computer system, cause the computer system to perform the method of any of claims 1 to 12, optionally wherein the computer system is a cloud-based system.

15. A computer system, the computer system comprising at least one processor, wherein the at least one processor is configured to perform the method of any of claims 1 to 12, optionally wherein the computer system is a cloud-based system.
